# EUROPÄISCHE PATENTSCHRIFT

(11) **EP 2 719 525 B1**
(45) Veröffentlichungstag und Bekanntmachung des Hinweises auf die Patenterteilung: **08.07.2015**
(21) Anmeldenummer: 13180619.2
(22) Anmeldetag: 16.08.2013
(51) Int. Cl.: B29D 30/20, B29D 30/24, B29D 30/32, B29D 30/36, B29D 30/72

(54) **Verfahren zur Herstellung eines Fahrzeugreifens**
Method for producing a tyre for a vehicle
Procédé de fabrication d'un pneu de véhicule

(30) Priorität: 12.10.2012 DE 102012109739
(43) Veröffentlichungstag der Anmeldung: 16.04.2014
(73) Patentinhaber: Continental Reifen Deutschland GmbH, 30165 Hannover (DE)
(72) Erfinder: Radziej, Guido, 38228 Salzgitter (DE); Linne, Stefan, 30900 Wedemark (DE)
(74) Vertreter: Widjaja, Wira

(56) Entgegenhaltungen:
- EP-A1- 1 216 814
- EP-A1- 1 634 727
- EP-A2- 0 997 263
- EP-A2- 1 295 702
- US-A1- 2010 000 662

## Beschreibung

Die Erfindung betrifft ein Verfahren zur Herstellung eines Fahrzeugreifens.

Bei konventionellen Fahrzeugreifen ist bekannt die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst die Innenschicht und die Einlagen als breite Materiallagen auf einer Reifenaufbautrommel angeordnet werden. Anschließend wird der Wulstkern auf die Einlage gesetzt und das Einlagenende um den Kern herumgeschlagen.

Bei der konventionellen Reifenherstellung wird bei einem Verfahrensschritt das Einlagenende von der Reifeninnenseite um den Wulstkern herumgeschlagen. Bei einem zweistufigen Verfahren zur Herstellung von Fahrzeugreifen wird die Reifenkarkasse auf einer separaten Karkasstrommel aufgebaut. Eine solche Karkasstrommel ist in der Regel relativ komplex aufgebaut.

Die EP 1 216 814 A1 offenbart ein Verfahren und eine Vorrichtung zum Aufbau eines Fahrzeugreifens, wobei Seitenwände mittels einer Zwischentrommel auf einen Karkassenrohling aufgebracht werden. Weitere Verfahren und Vorrichtungen zum Aufbau von Fahrzeugreifen sind aus EP 1 634 727 und EP 0 997 263 bekannt.

Bei den herkömmlichen Reifenaufbauverfahren werden auf der Karkasstrommel beide Seitenwände aufgewickelt. Anschließend wird die Reifenkarkasse mit den bereits applizierten Seitenwänden zu der Bombiertrommel verfahren. Ein Nachteil bei diesem herkömmlichen Verfahren besteht darin, dass bestimmte Reifenkonstruktionen nicht realisierbar sind.

Der Erfindung liegt die Aufgabe zugrunde, ein Verfahren bereitzustellen, mit dem bestimmte Reifenkonstruktionen auf einfache Weise hergestellt werden können.

Gelöst wird die Aufgabe gemäß Anspruch 1 dadurch, dass ein Verfahren mit folgenden Schritten eingesetzt wird:
a) Fertigstellen einer Reifenkarkasse auf einer Karkasstrommel,
   wobei auf der Karkasstrommel keine Reifenaufbauteile in Form von Seitenwänden aufgelegt werden,
b) Anordnen von Seitenwänden auf einer Bombiertrommel,
c) Verfahren der Reifenkarkasse über die auf der Bombiertrommel angeordneten Seitenwände,
   wobei die Seitenwände in Bezug auf den Reifenwulst der Reifenkarkasse ein an der Innenseite überstehendes inneres Seitenwand-Bauteil und ein an der Außenseite überstehendes äußeres Seitenwand-Bauteil aufweisen,
d) Durchführung einer Kernklemmung mit Kombikernklemm-Segmenten der Bombiertrommel,
   wobei das Kombikernklemm-Segment ein in radialer Richtung expandierbares Kernklemmsegment und einen expandierbaren Tuckheber umfasst,
   wobei über eine Kernklemmung in radialer Richtung die auf der Bombiertrommel anliegenden Seitenwände mit der koaxial positionierten Reifenkarkasse im Bereich des Reifenwulstes mit der Reifenkarkasse verbunden wird,
e) Hochschlagen des inneren Seitenwand-Bauteil mit einem Tuckheber des Kombikernklemm-Segmentes in radialer Richtung,
   wobei der Tuckheber in radialer Richtung expandiert und dabei das innere Seitenwand-Bauteil mit der Innenseite der Reifenkarkasse verbunden wird,
f) Weiterführen oder Einleitung eines Bombiervorganges der Reifenkarkasse mit den angebundenen Seitenwänden,
   wobei die äußeren Seitenwandbauteile mit einem Hochschlagmittel seitlich an der Reifenkarkasse hochgeschlagen werden,
g) Fertigstellen des Reifenrohlings mit einem konventionellen Herstellungsverfahren.

Ein Vorteil der Erfindung ist insbesondere darin zu sehen, dass durch das Verfahren auf einfache Weise ein Fahrzeugreifen mit einer speziellen Konstruktion hergestellt werden kann.

Das Verfahren ermöglicht die Herstellung von speziellen Reifenkonstruktionen, die mit den herkömmlichen Reifenaufbauverfahren bisher nicht möglich waren. Diese Art der Reifenkonstruktion wird durch die erfindungsgemäße Reihenfolge der Verfahrensschritte nach Patentanspruch 1 ermöglicht. Bedeutend ist dabei, dass die Seitenwand nicht auf der Karkasstrommel appliziert wird, sondern erst auf der Bombiertrommel. Ein weiterer Vorteil besteht darin, dass die Zykluszeit zur Herstellung des Fahrzeugreifens bzw. Reifenrohlings insgesamt optimiert wird.

Der Einsatz des Kombikernklemm-Segmentes nach Schritt d) bewirkt eine feste Verbindung zwischen dem inneren Seitenwand-Bauteil und der inneren Seite der Reifenkarkasse. Mit dem entsprechenden Tuckheber wird das innere Seitenwand-Bauteil mit einer hohen Geschwindigkeit und präzise gegen die innere Seite des Reifenwulst gedrückt. Der Einsatz des Kombikernklemmsegmentes hat weiterhin den Vorteil, dass mit diesem Bauteil zwei Segmenthübe nacheinander in radialer Richtung erfolgen können. Dadurch wird zum einen die Seitenwand auf der Unterseite der Reifenkarkasse fest angebunden und zum anderen das innere Seitenwand-Bauteil fest mit der inneren Seite des Reifenwulstes verbunden.

In einer vorteilhaften Weiterbildung der Erfindung ist vorgesehen, dass bei Schritt d) die Bewegung des Tuckhebers in radialer Richtung mit der Bewegung des Kernklemmsegmentes gekoppelt ist.

Dadurch wird auf einfache Weise das Hochschlagen des inneren Seitenwand-Bauteils vorbereitet. Außerdem nimmt auf diese Weise der Tuckheber nur wenig Bauraum in Anspruch.

In einer weiteren vorteilhaften Weiterbildung der Erfindung ist vorgesehen, dass das Kernklemmsegment und das daran anschließende Führungselement für den Tuckheber einstückig ausgebildet sind.

Dadurch werden die Funktionen des Kernklemmsegmentes und des Tuckhebers auf einfache Weise in einem Bauteil integriert.

In einer weiteren vorteilhaften Weiterbildung der Erfindung ist vorgesehen, dass bei Schritt e) das Hochschlagen des inneren Seitenwand-Bauteiles mit dem Tuckheber pneumatisch erfolgt.

Dadurch erfolgt das Hoschlagen des inneren Seitenwand-Bauteils mit einer hohen Geschwindigkeit.

In einer weiteren vorteilhaften Weiterbildung der Erfindung ist vorgesehen, dass das Führungselement für den Tuckheber einen Hohlraum für den pneumatischen Antrieb des Tuckhebers aufweist.

Dadurch kann ein ausreichender Kompressionsdruck zur Verfügung gestellt werden, um den Tuckheber in radiale Richtung zu bewegen.

In einer weiteren vorteilhaften Weiterbildung der Erfindung ist vorgesehen, dass auf der Unterseite des Tuckhebers ein demontierbarer Kolben für die Druckkraftaufnahme des Tuckhebers angeordnet ist.

Der entsprechende Kolben gewährleistet eine ausreichende Druckaufnahme für die Bewegung des Tuckhebers.

In einer weiteren vorteilhaften Weiterbildung der Erfindung ist vorgesehen, dass die Querschnittskontur des Tuckhebers auf der zur Reifenkarkasse liegenden Seite in Form einer senkrechten Linie verläuft,
wobei die obere Außenkontur rampenförmig ausgebildet ist.

Dadurch erfolgt ein präzises Hochschlagen des inneren Seitenwand-Bauteils.

In einer weiteren vorteilhaften Weiterbildung der Erfindung ist vorgesehen, dass bei Schritt d) die Kernklemmung mit einem Kniehebel-System erfolgt, wobei der vordere Drehpunkt am Kombikernklemm-Segment angeordnet und der hintere Drehpunkt an einem Kolben der Bombiertrommel angeordnet ist.

Durch den Einsatz des Kniehelbel- Systems erfolgt die Klemmung mit den Kernklemmsegmenten mit einer hohen Präzision.

In einer weiteren vorteilhaften Weiterbildung der Erfindung ist vorgesehen, dass bei Schritt d) die Bewegung des Kniehebel-Systems mit dem Kolben erfolgt, wobei der Kolben der Bombiertrommel pneumatisch bewegt wird.

Dadurch wird eine ausreichende Druckkraft zur Verfügung gestellt, um die Kernklemmsegmente in radialer Richtung zu bewegen.

In einer weiteren vorteilhaften Weiterbildung der Erfindung ist vorgesehen, dass die Kombikernklemm-Segmente mit einer Manschette überdeckt sind, wobei die Manschette bei den Schritten d) und e) elastisch verformt wird.

Durch den Einsatz der Manschette wird unter anderem eine Beschädigung des Seitenwand-Bauteils effektiv vermieden.

In einer weiteren vorteilhaften Weiterbildung der Erfindung ist vorgesehen, dass vor Schritt c) die Seitenwände auf einer separaten Seitenwandtrommel vorkonfektioniert werden.

Auf diese Weise lässt sich insgesamt Zyklus einsparen, da die Seitenwand-Bautrommel parallel zu den anderen Verfahrensschritten betrieben wird.

In einer weiteren vorteilhaften Weiterbildung der Erfindung ist vorgesehen, dass vor Schritt c) die vorkonfektionierten Seitenwände mit einer Seitenwandtransfer-Einheit koaxial im Bereich der Segmente für die Kernklemmung auf der Bombiertrommel angeordnet werden.

Dadurch wird eine präzise Übergabe der Seitenwände an die Bombiertrommel gewährleistet.

In einer weiteren vorteilhaften Weiterbildung der Erfindung ist vorgesehen, dass bei Schritt a) die Reifenkarkasse auf der Karkasstrommel mit einem Kern und einem Lagenumschlag vorkonfektioniert wird.

Auf diese Weise wird die Zykluszeit insgesamt reduziert.

In einer weiteren vorteilhaften Weiterbildung der Erfindung ist vorgesehen, dass bei Schritt a) die Reifenkarkasse auf der Karkasstrommel in Form eines flachen Schlauches ohne einen Lagenumschlag vorkonfektioniert wird.

Bei dieser Variante erfolgt auf der Karkasstrommel kein Lagenumschlag. Die Reifenkarkasse wird in Form eines flachen Schlauches zu der Bombiertrommel transferiert. Der Lagenumschlag der Karkasseinlage erfolgt bei dieser Variante zusammen mit dem Hochschlagen der Seitenwände.

In einer weiteren vorteilhaften Weiterbildung der Erfindung ist vorgesehen, dass bei Schritt f) die Seitenwand vor dem Transfer des Gürtel-Laufstreifen-Paketes über die Bombiertrommel hochgeschlagen wird.

Dadurch ist eine bestimmte Reifenkonstruktion realisierbar, bei der die Seitenwand unter dem Gürtel-Laufstreifen-Paket angeordnet werden kann.

In einer weiteren vorteilhaften Weiterbildung der Erfindung ist vorgesehen, dass bei Schritt f) die Seitenwand nach dem Transfer des Gürtel-Laufstreifen-Paketes über die Bombiertrommel hochgeschlagen wird, wobei ein Teil der Seitenwand über dem Laufstreifen angeordnet werden kann.

Dadurch ist es möglich, den oberen Teil der Seitenwand über dem Gürtel-Laufstreifen-Paket anzuordnen.

In einer weiteren vorteilhaften Weiterbildung der Erfindung ist vorgesehen, dass auf der separaten Seitenwandtrommel außer der Seitenwand weitere Reifenaufbauteile appliziert werden.

Als weitere Reifenaufbauteile kommen z. B. Wulstverstärker in Form von gummierten Textil- oder Stohrstahlkordlagen in Frage. Das Auflegen dieser weiteren Reifenaufbauteile auf der Seitenwandtrommel reduziert insgesamt die Zykluszeit.

Anhand mehrerer Ausführungsbeispiele soll die Erfindung näher erläutert werden. Es zeigen:
Fig. 1 : Teile der Bombiertrommel
Fig. 2: Eine Querschnittsansicht durch Teile der Bombiertrommel
Fig. 3: Das Kombikernklemm-Segment in einem expandiertem Zustand
Fig. 4: Eine vergrößerte Darstellung des Kombikernklemm-Segmentes in der Fig. 3

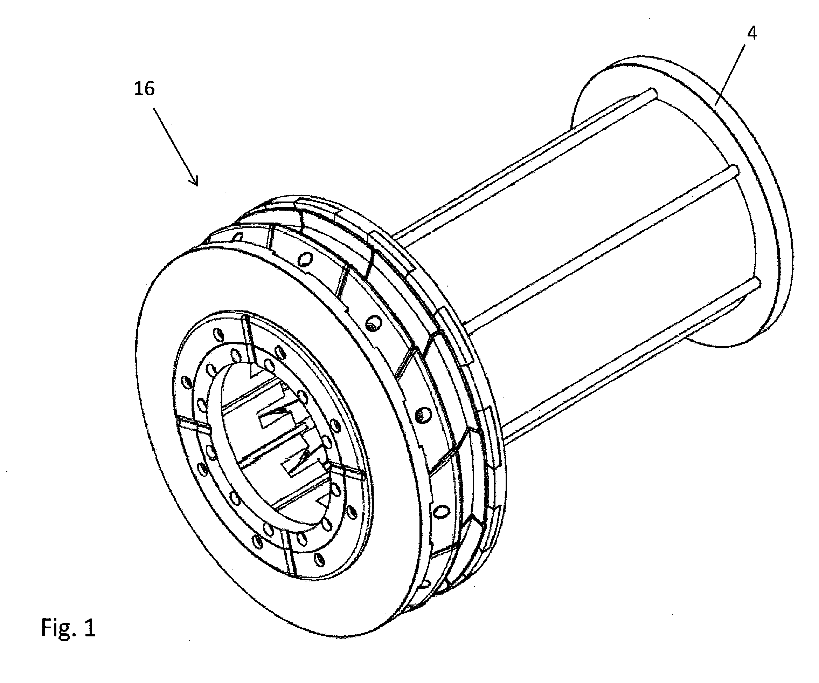

Fig. 1 zeigt Teile einer Bombiertrommel in einer dreidimensionalen Ansicht. Die Kombikernklemm-Segmente 16 und der Kolben 4 der Bombiertrommel sind im Wesentlichen rotationssymmetrisch ausgebildet. Über den Umfang verteilt weist die Bombiertrommel insgesamt zwölf Kombikerklemm-Segmente 16 auf, die in radialer Richtung expandieren können.

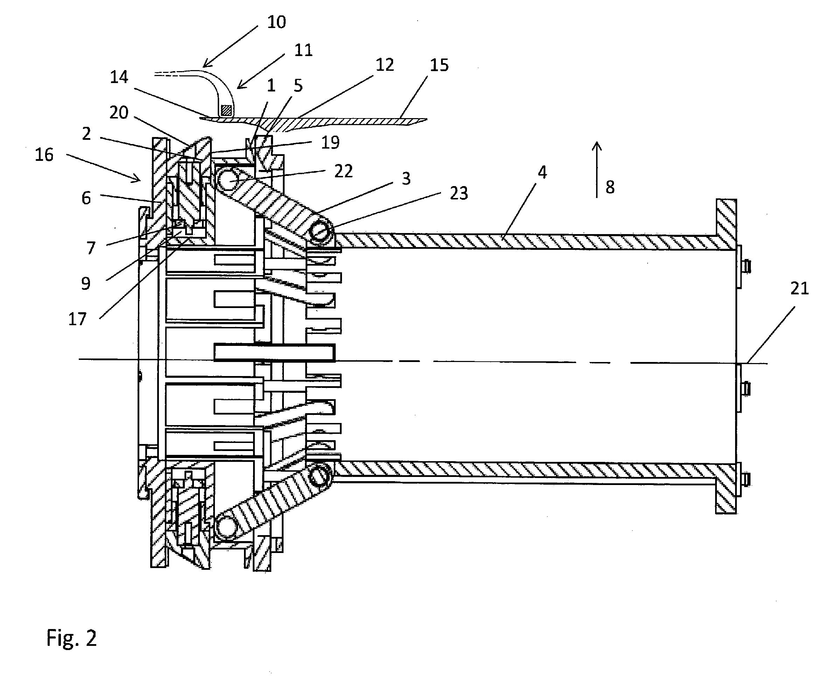

Die Fig. 2 zeigt eine Querschnittsansicht durch die Teile der Bombiertrommel, die in der Fig. 1 dargestellt ist. In der Figur ist eine der ersten Verfahrensschritte dargestellt, bei dem die Seitenwand 12 in Form eines zylindrischen Ringes bereits auf der Bombiertrommel angeordnet worden ist. Die Seitenwand 12 ist koaxial zu den Kombikernklemm-Segmenten 16 angeordnet und weist ein inneres Seitenwand-Bauteil 14 und ein äußeres Seitenwandbauteil 15 auf. Das Seitenwand-Bauteil 12 wird zunächts durch das dargestellte Kombikernklemm-Segment 16 koaxial gehalten. In einem weiteren Verfahrensschritt wird die Karkasse 10 über die Bombiertrommel gefahren, wobei der Reifenwulst 11 koaxial zu den Kombikernklemm-Segmenten 16 positioniert wird. Die Reifenkarkasse 10 besitzt eine oder mehrere Karkasslagen, die um den dargestellten Reifenkern herumgeschlagen worden sind. In einem weiteren Verfahrensschritt erfolgt das Hochschlagen des inneren Seitenwand-Bauteils 14 gegen die Innenseite des Reifenwulstes 11. Dieses Hochschlagen erfolgt im Wesentlichen durch den Tuckheber 2, der in radialer Richtung 8 expandiert. Das Kombikernklemm-Segment 16 umfasst insbesondere das Kernklemmsegment 1 mit dem sich anschließenden Führungselement 17 für die Bewegung des Tuckhebers 2. Das Führungselement 17 ist in Form eines Zylinders ausgebildet. Über den Hohlraum 8 wird Druckluft zugeführt, wodurch der Tuckheber 2 in radialer Richtung mit dem Kolben 7 expandiert wird. Der Tuckheber 2 besitzt auf der rechten Außenseite eine Außenkontur in Form einer senkrechten Linie 19. Die obere Außenkontur 20 des Tuckhebers 2 ist rampenförmig ausgebildet. Das linke Führungselement 6 führt den Tuckheber 2 in radialer Richtung 8. Der Hub des Kernklemmsegmentes 1 in radialer Richtung 8 erfolgt über das Kniehebesystem bzw. den Kniehebel 3. Der Kniehebel 3 ist an seinem vorderen Ende mit dem Kombikernklemm-Segment 16 gekoppelt. Am hinteren Ende des Kniehebels 3 ist ein hinterer Drehpunkt 23 angeordnet, der mit dem Kolben 4 der Bombiertrommel verbunden ist. Alle Bauteile der Bombiertrommel sind im Wesentlichen rotationssymmetrisch zur axialen Symmetrielinie 21 ausgebildet.

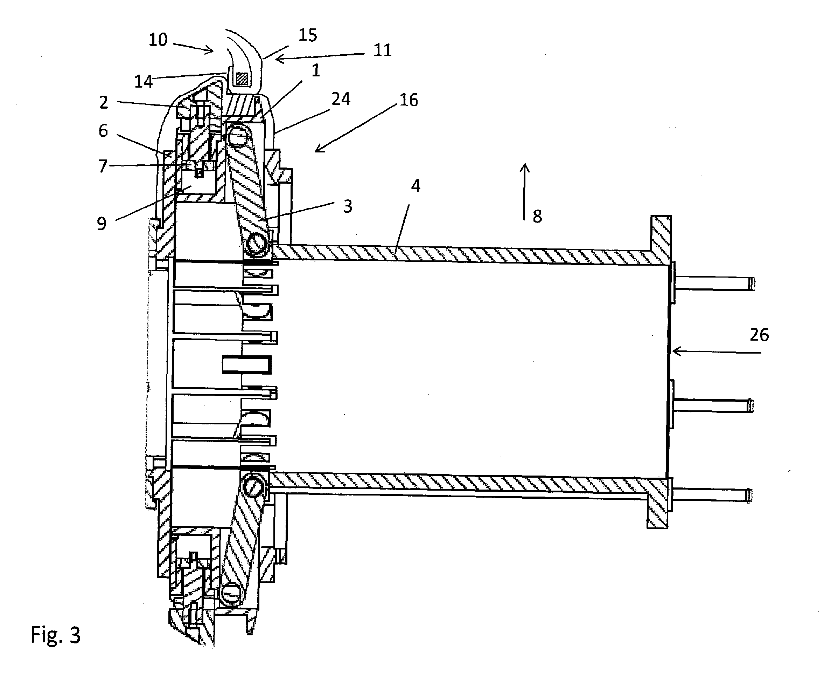

Die Fig. 3 zeigt einen weiteren Verfahrensschritt, bei dem das Kombikernklemm-Segment 16 und der Tuckheber 2 in einem expandierten Zustand dargestellt sind. Der Kolben 4 wird mit Druckluft in axialer Richtung 26 bewegt. Dadurch wird über das Kniehebelsystem 3 das Kombikernklemm-Segment 16 in radialer Richtung 8 expandiert. Das Kombikernklemm-Segment 16 ist an seiner Außenseite mit einer Manschette 24 abgedeckt. Außerdem ist in der Mulde des Kernklemmsegmentes 1 ein elastisches Element 25 angeordnet, mit dem die Seitenwand 15 unterhalb des Reifenwulstes fest mit der Unterseite des Reifenwulstes verbunden wird. In einem nachfolgendem Verfahrensschritt oder gleichzeitig mit dem Expandieren des Kombikernklemm-Segmentes 16 erfolgt der Expandiervorgang des Tuckhebers 2. Beim Expandieren des Tuckhebers 2 wird das innere Seitenwand-Bauteil 14 hochgeschlagen und fest mit der Reifenkarkasse 10 verbunden. Parallel zu diesem Verfahrensschritt erfolgt während des Bombiervorgangs das Hochschlagen des äußeren Seitenwand-Bauteils 15. Das Hochschlagen des äußeren Seitenwand-Bauteils kann jedoch auch nach dem Hochschlagen des inneren Seitenwand-Bauteils erfolgen. Beim Bombiervorgang wird die Reifenkarkasse mit dem koaxial angeordneten Gürtellaufstreifenpaket vereinigt. Bei diesem Vorgang wird das obere Ende des äußeren Seitenwand-Bauteils 15 entweder über oder unter dem Gürtellaufstreifenpaket angeordnet.

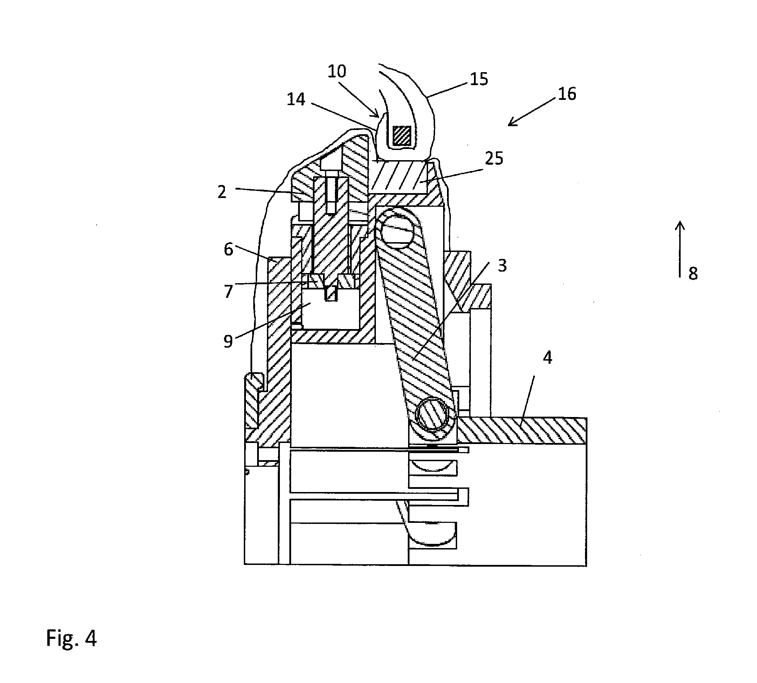

Die Fig. 4 zeigt eine vergrößerte Darstellung des Kombikernklemm-Segmentes 16 in der Fig. 3. Das Kombikernklemm-Segment 16 ist im expandierten Zustand dargestellt. Das innere Seitenwand-Bauteil 14 wurde durch den Tuckheber 2 in radialer Richtung 8 hochgeschlagen und fest mit der Reifenkarkasse 10 verbunden. Nach dem Bombiervorgang fallen die Kombikernklemmsegmente 16 wieder ein, damit der fertig gestellte Reifenrohling von der Bombiertrommel genommen werden kann.

### Bezugszeichenliste

### (ist Teil der Beschreibung)

- 1: Kernklemm-Segment mit Führungselement für Tuckheber
- 2: Tuckheber
- 3: Kniehebel bzw. Kniehebelsystem
- 4: Kolben der Bombiertrommel
- 5: Führungselement für Kernklemmsegment
- 6: linkes Führungselement für Tuckheber
- 7: Kolben des Tuckheber
- 8: radiale Richtung
- 9: Hohlraum für pneumtischen Antrieb des Tuckhebers
- 10: Reifenkarkasse mit Lagenumschlag
- 11: Reifenwulst mit Lagenumschlag und Kern
- 12: Reifenbauteil in Form einer Seitenwand
- 13: radiales Expandieren der Segmente
- 14: inneres Seitenwand-Bauteil
- 15: äußeres Seitenwand-Bauteil
- 16: Kombikernklemm-Segment
- 17: anschließendes Führungselement für Tuckheber
- 18: Hohlraum
- 19: senkrechte Linie
- 20: obere Außenkontur
- 21: axiale Symmetrielinie
- 22: vorderer Drehpunkt
- 23: hinterer Drehpunkt
- 24: Manschette
- 25: elastisches Element im Kernklemmsegment
- 26: axiale Richtung

## Patentansprüche

1. Verfahren zur Herstellung eines Fahrzeugreifens mit einer Reifenkarkasse (10), Reifenwülsten (11) mit Kernen, einem Reifengürtel und einem Laufstreifen mit folgenden Schritten:
a) Fertigstellen einer Reifenkarkasse (10) auf einer Karkasstrommel,
wobei auf der Karkasstrommel keine Reifenaufbauteile in Form von Seitenwänden aufgelegt werden,
b) Anordnen von Seitenwänden (12) auf einer Bombiertrommel,
c) Verfahren der Reifenkarkasse (10) über die auf der Bombiertrommel angeordneten Seitenwände,
wobei die Seitenwände (12) in Bezug auf den Reifenwulst (11) der Reifenkarkasse (10) ein an der Innenseite überstehendes inneres Seitenwand-Bauteil (14) und ein an der Außenseite überstehendes äußeres Seitenwand-Bauteil (15) aufweisen,
d) Durchführung einer Kernklemmung mit Kombikernklemm-Segmenten (16) der Bombiertrommel,
wobei das Kombikernklemm-Segment (16) ein in radialer Richtung (8) expandierbares Kernklemmsegment (1) und einen expandierbaren Tuckheber (2) umfasst,
wobei über eine Kernklemmung in radialer Richtung (8) die auf der Bombiertrommel anliegenden Seitenwände (12) mit der koaxial positionierten Reifenkarkasse (10) im Bereich des Reifenwulstes (11) mit der Reifenkarkasse (10) verbunden wird,
e) Hochschlagen des inneren Seitenwand-Bauteil (14) mit einem Tuckheber (2) des Kombikernklemm-Segmentes (16) in radialer Richtung (8),
wobei der Tuckheber (2) in radialer Richtung (8) expandiert und dabei das innere Seitenwand-Bauteil (14) mit der Innenseite der Reifenkarkasse (10) verbunden wird,
f) Weiterführen oder Einleitung eines Bombiervorganges der Reifenkarkasse (10) mit den angebundenen Seitenwänden (12),
wobei die äußeren Seitenwandbauteile (15) mit einem Hochschlagmittel seitlich an der Reifenkarkasse (10) hochgeschlagen werden,
g) Fertigstellen des Reifenrohlings mit einem konventionellen Herstellungsverfahren.

2. Verfahren nach Anspruch 1,
**dadurch gekennzeichnet, dass**
bei Schritt d) die Bewegung des Tuckhebers (2) in radialer Richtung mit (8) der Bewegung des Kernklemmsegmentes (1) gekoppelt ist.

3. Verfahren nach einem der vorhergehenden Ansprüche,
**dadurch gekennzeichnet, dass**
das Kernklemmsegment (1) und das daran anschließende Führungselement (17) für den Tuckheber (2) einstückig ausgebildet sind.

4. Verfahren nach einem der vorhergehenden Ansprüche,
**dadurch gekennzeichnet, dass**
bei Schritt e) das Hochschlagen des inneren Seitenwand-Bauteiles (14) mit dem Tuckheber (2) pneumatisch erfolgt.

5. Verfahren nach einem der vorhergehenden Ansprüche,
**dadurch gekennzeichnet, dass**
das Führungselement (17) für den Tuckheber (2) einen Hohlraum (9) für den pneumatischen Antrieb des Tuckhebers (2) aufweist.

6. Verfahren nach einem der vorhergehenden Ansprüche,
**dadurch gekennzeichnet, dass**
auf der Unterseite des Tuckhebers (2) ein demontierbarer Kolben (7) für die Druckkraftaufnahme des Tuckhebers (2) angeordnet ist.

7. Verfahren nach einem der vorhergehenden Ansprüche,
**dadurch gekennzeichnet, dass**
die Querschnittskontur des Tuckhebers (2) auf der zur Reifenkarkasse (10) liegenden Seite in Form einer senkrechten Linie (19) verläuft,
wobei die obere Außenkontur rampenförmig (20) ausgebildet ist.

8. Verfahren nach einem der vorhergehenden Ansprüche,
**dadurch gekennzeichnet, dass**
bei Schritt d) die Kernklemmung mit einem Kniehebel-System (3) erfolgt, wobei der vordere Drehpunkt (22) am Kombikernklemm-Segment (16) angeordnet und der hintere Drehpunkt (23) an einem Kolben (4) der Bombiertrommel angeordnet ist.

9. Verfahren nach einem der vorhergehenden Ansprüche,
**dadurch gekennzeichnet, dass**
bei Schritt d) die Bewegung des Kniehebel-Systems (3) mit dem Kolben (4) erfolgt, wobei der Kolben (4) der Bombiertrommel pneumatisch bewegt wird.

10. Verfahren nach einem der vorhergehenden Ansprüche,
**dadurch gekennzeichnet, dass**
die Kombikernklemm-Segmente (16) mit einer Manschette (14) überdeckt sind, wobei die Manschette (14) bei den Schritten d) und e) elastisch verformt wird.

11. Verfahren nach einem der vorhergehenden Ansprüche,
**dadurch gekennzeichnet, dass**
vor Schritt c) die Seitenwände (12) auf einer separaten Seitenwandtrommel vorkonfektioniert werden.

12. Verfahren nach einem der vorhergehenden Ansprüche,
**dadurch gekennzeichnet, dass**
vor Schritt c) die vorkonfektionierten Seitenwände (12) mit einer Seitenwandtransfer-Einheit koaxial im Bereich der Kernklemmsegmente (1) auf der Bombiertrommel angeordnet werden.

## Claims

1. Method for producing a vehicle tyre with a tyre carcass (10), tyre beads (11) with cores, a tyre breaker belt and a tread rubber, comprising the following steps:
a) completing a tyre carcass (10) on a carcass drum,
wherein no tyre building parts in the form of sidewalls are fitted on the carcass drum,
b) arranging sidewalls (12) on a shaping drum,
c) moving the tyre carcass (10) over the sidewalls arranged on the shaping drum,
wherein the sidewalls (12) have with respect to the tyre bead (11) of the tyre carcass (10) an inner sidewall component (14) projecting on the inner side and an outer sidewall component (15) projecting on the outer side,
d) carrying out a core clamping with combined core-clamping segments (16) of the shaping drum,
wherein the combined core-clamping segment (16) comprises a core-clamping segment (1) that can expand in the radial direction (8) and a tuck lifter (2) that can expand,
wherein the sidewalls (12) lying on the shaping drum, with the coaxially positioned tyre carcass (10), are connected to the tyre carcass (10) in the region of the tyre bead (11) by way of a core clamping in the radial direction (8),
e) turning up the inner sidewall component (14) with a tuck lifter (2) of the combined core-clamping segment (16) in the radial direction (8), wherein the tuck lifter (2) expands in the radial direction (8) and the inner sidewall component (14) is thereby connected to the inner side of the tyre carcass (10),
f) continuing or initiating a process of shaping the tyre carcass (10) with the joined-on sidewalls (12),
wherein the outer sidewall components (15) are turned up laterally against the tyre carcass (10) by a turning-up means,
g) completing the tyre blank by a conventional method of production.

2. Method according to Claim 1,
**characterized in that**,
in step d), the movement of the tuck lifter (2) in the radial direction (8) is coupled with the movement of the core-clamping segment (1).

3. Method according to one of the preceding claims,
**characterized in that**
the core-clamping segment (1) and the guiding element (17) adjoining thereto for the tuck lifter (2) are formed in one piece.

4. Method according to one of the preceding claims,
**characterized in that**,
in step e), the turning up of the inner sidewall component (14) by the tuck lifter (2) is performed pneumatically.

5. Method according to one of the preceding claims,
**characterized in that**
the guiding element (17) for the tuck lifter (2) has a cavity (9) for the pneumatic drive of the tuck lifter (2).

6. Method according to one of the preceding claims,
**characterized in that**
a removable piston (7) for the compressive force absorption of the tuck lifter (2) is arranged on the underside of the tuck lifter (2).

7. Method according to one of the preceding claims,
**characterized in that**
the cross-sectional contour of the tuck lifter (2) on the side lying towards the tyre carcass (10) runs in the form of a perpendicular line (19), wherein the upper outer contour is formed in the shape of a ramp (20).

8. Method according to one of the preceding claims,
**characterized in that**,
in step d), the core clamping is performed with a toggle lever system (3), wherein the front pivoting point (22) is arranged on the combined core-clamping segment (16) and the rear pivoting point (23) is arranged on a piston (4) of the shaping drum.

9. Method according to one of the preceding claims,
**characterized in that**,
in step d), the movement of the toggle lever system (3) is performed with the piston (4), wherein the piston (4) of the shaping drum is moved pneumatically.

10. Method according to one of the preceding claims,
**characterized in that**
the combined core-clamping segments (16) are covered by a sleeve (14), wherein the sleeve (14) is elastically deformed in steps d) and e).

11. Method according to one of the preceding claims,
**characterized in that**,
before step c), the sidewalls (12) are made in advance on a separate sidewall drum.

12. Method according to one of the preceding claims,
**characterized in that**,
before step c), the ready-made sidewalls (12) are arranged by a sidewall transfer unit coaxially in the region of the core-clamping segments (1) on the shaping drum.

## Revendications

1. Procédé de fabrication d'un bandage pour roue de véhicule doté d'une carcasse (10) de bandage, de bourrelets (11) de bandage dotés d'âmes, d'une ceinture de bandage et d'une bande de roulement, le procédé présentant les étapes suivantes :
a) préparation d'une carcasse (10) de bandage sur un tambour de carcasse, aucun composant du bandage de roue présentant la forme de paroi latérale n'étant placé sur le tambour de carcasse,
b) placement de parois latérales (12) sur un tambour de bombage,
c) déplacement de la carcasse (10) de bandage sur les parois latérales disposées sur le tambour de bombage,
les parois latérales (12) présentant par rapport aux bourrelets (11) de bandage de la carcasse (10) de bandage un composant intérieur (14) de paroi latérale qui déborde sur le côté intérieur et un composant extérieur (15) de paroi latérale qui déborde sur le côté extérieur,
d) réalisation d'un serrage d'âme à l'aide de segments (16) de serrage d'âme combinés du tambour de bombage,
le segment (16) de serrage d'âme combiné comportant un segment (1) de serrage d'âme expansible dans la direction radiale (8) et un poussoir expansible de rabattement (2),
les parois latérales (12) placées sur le tambour de bombage étant raccordées par l'intermédiaire d'un serrage d'âme dans la direction radiale (8) à la carcasse (10) de bandage placée coaxialement au niveau du bourrelet (11) de bandage à la carcasse (10) de bandage,
e) relèvement du composant intérieur (14) de paroi latérale dans la direction radiale (8) à l'aide d'un poussoir de rabattement (2) du segment (16) de serrage d'âme combiné,
le poussoir de rabattement (2) se dilatant dans la direction radiale (8) et reliant ainsi le composant intérieur (14) de paroi latérale au côté intérieur de la carcasse (10) de bandage,
f) poursuite ou lancement d'une opération de bombage de la carcasse (10) de bandage avec les parois latérales (12) qui lui sont reliées,
les composants extérieurs (15) de paroi latérale étant rabattus vers le haut latéralement sur la carcasse (10) de bandage à l'aide d'un moyen de rabattement vers le haut et
g) finition de l'ébauche de bandage en appliquant un procédé de fabrication classique.

2. Procédé selon la revendication 1, **caractérisé en ce qu'**à l'étape d), le déplacement du poussoir de rabattement (2) dans la direction radiale (8) est couplé au déplacement du segment (1) de serrage d'âme.

3. Procédé selon l'une des revendications précédentes, **caractérisé en ce que** le segment (1) de serrage d'âme et l'élément de guidage (17) qui s'y raccorde pour le poussoir de rabattement (2) sont configurés d'un seul tenant.

4. Procédé selon l'une des revendications précédentes, **caractérisé en ce qu'**à l'étape e), le rabattement vers le haut du composant intérieur (14) de paroi latérale à l'aide du poussoir de relèvement (2) s'effectue pneumatiquement.

5. Procédé selon l'une des revendications précédentes, **caractérisé en ce que** l'élément de guidage (17) du poussoir de rabattement (2) présente une cavité (9) permettant l'entraînement pneumatique du poussoir de rabattement (2).

6. Procédé selon l'une des revendications précédentes, **caractérisé en ce qu'**un piston démontable (7) permettant de reprendre la force de poussée du poussoir de relèvement (2) est disposé sur le côté inférieur du poussoir de rabattement (2).

7. Procédé selon l'une des revendications précédentes, **caractérisé en ce que** le contour de la section transversale du poussoir de rabattement (2) suit la forme d'une ligne perpendiculaire (19) sur le côté situé sur la carcasse (10) de bandage, le contour extérieur supérieur étant configuré en rampe (20).

8. Procédé selon l'une des revendications précédentes, **caractérisé en ce qu'**à l'étape d), le serrage d'âme s'effectue à l'aide d'un système (3) de levier à genouillère, le centre de rotation avant (22) étant disposé sur le segment (16) de serrage d'âme combiné et le centre de rotation arrière (23) sur un piston (4) du tambour de bombage.

9. Procédé selon l'une des revendications précédentes, **caractérisé en ce qu'**à l'étape d), le déplacement du système (3) de levier à genouillère s'effectue à l'aide du piston (4), le piston (4) du tambour de bombage étant déplacé pneumatiquement.

10. Procédé selon l'une des revendications précédentes, **caractérisé en ce que** les segments (16) de serrage d'âme combinés sont recouverts d'une manchette (14), la manchette (14) étant déformée élastiquement lors des étapes d) et e).

11. Procédé selon l'une des revendications précédentes, **caractérisé en ce qu'**avant l'étape c), les parois latérales (12) sont pré-confectionnées sur un tambour séparé de paroi latérale.

12. Procédé selon l'une des revendications précédentes, **caractérisé en ce qu'**avant l'étape c), les parois latérales (12) pré-confectionnées sont disposées coaxialement au niveau des segments (1) de serrage d'âme sur le tambour de bombage à l'aide d'une unité de transfert de paroi latérale.
